# FASCICULE DE BREVET EUROPEEN

(11) **EP 4 281 269 B1**
(45) Date de publication et mention de la délivrance du brevet: **30.10.2024**
(21) Numéro de dépôt: 22702766.1
(22) Date de dépôt: 13.01.2022
(51) Int. Cl.: B29C 51/04, B29C 51/00, B29C 51/26, B29C 51/42, B32B 38/12, B29C 51/22, B29D 24/00, B32B 3/26, B32B 3/28, G10K 11/172, B29K 81/00, B29K 79/00, B29K 309/08, B29K 307/04, B29K 477/00, B29C 51/08, B32B 37/12, B32B 37/04, B29L 31/00, B29L 31/60, B29L 9/00

(54) **PROCEDE ET CHAINE DE FABRICATION D'UN PANNEAU MULTIELEMENTS ACOUSTIQUES POUR STRUCTURE D'ATTENUATION ACOUSTIQUE**
VERFAHREN UND VORRICHTUNG ZUR HERSTELLUNG EINER AKUSTIKPLATTE MIT MEHREREN ELEMENTEN FÜR EINE SCHALLDÄMMUNGSSTRUKTUR
METHOD AND APPARATUS OF A MULTIELEMENT ACOUSTIC PANNEL FOR SOUND ATTENUATION STRUCTURE

(30) Priorité: 19.01.2021 FR 2100483
(43) Date de publication de la demande: 29.11.2023
(73) Titulaire: SAFRAN, 75015 Paris (FR)
(72) Inventeur: LANFANT, Nicolas Pierre, 77550 MOISSY-CRAMAYEL (FR); ALGLAVE, Hugues Laurent, 77550 MOISSY-CRAMAYEL (FR); DUNLEAVY, Patrick, 77550 MOISSY-CRAMAYEL (FR)
(74) Mandataire: Cabinet Beau de Loménie
(86) Numéro de dépôt international: PCT/FR2022/050069
(87) Numéro de publication internationale: WO 2022/157440

(56) Documents cités:
- FR-A1- 3 082 987
- JP-A- S60 244 523
- US-A1- 2020 202 830

## Description

### Domaine Technique

La présente invention se rapporte au domaine général des structures ou panneaux d'atténuation acoustiques. Elle concerne plus particulièrement la fabrication de structures d'atténuation acoustiques complexes utilisées pour réduire les bruits produits dans les moteurs d'avion comme dans les turbines à gaz ou échappement de ceux-ci.

### Technique antérieure

Les structures d'atténuation acoustique sont typiquement constituées d'une plaque ou peau de surface acoustique perméable aux ondes acoustiques que l'on souhaite atténuer, d'une plaque ou peau pleine réfléchissante dite « plaque de fermeture », et d'un corps cellulaire, tel qu'un nid d'abeille ou une structure poreuse, disposé entre ces deux parois. De façon bien connue, de tels panneaux forment des résonateurs de type Helmholtz qui permettent d'atténuer dans une certaine gamme de fréquences les ondes acoustiques. Des structures d'atténuation acoustique de ce type sont notamment décrites dans les documents US 5 912 442 et GB 2 314 526.

Ces structures d'atténuation acoustique sont limitées à des formes de cellules simples telle que celles des alvéoles d'une structure classique de type NIDA^{®}. En conséquence, les performances acoustiques obtenues sont limitées à l'absorption d'une gamme de fréquences qui ne couvre pas suffisamment les fréquences les plus basses émises par un aéronef, notamment pour des aéronefs dotés de turbomachines à hélices ou soufflantes de grand diamètre imposant une vitesse de rotation faible pour respecter le critère de vitesse subsonique en tête de pale.

Une solution pour augmenter la gamme de fréquence d'atténuation acoustique est de superposer deux corps cellulaires ayant des formes et des dimensions de cellules différentes. Cette solution présente l'inconvénient d'augmenter significativement l'encombrement de la structure d'atténuation acoustique et ne permet pas de descendre gamme de fréquence pour réduire les ondes à très basses fréquences émises.

Une autre solution connue consiste à placer des troncs de cône ouverts dans des alvéoles comme décrits dans le document FR 3 082 987. Dans le document FR 3 082 987, des troncs de cônes sont reliés entre eux par des barrettes qui doivent être positionnées dans des encoches réalisées à l'extrémité des alvéoles. Cependant, cette solution est difficile à mettre oeuvre en particulier en ce qui concerne le contrôle du positionnement entre les troncs de cône et les alvéoles ainsi que l'étanchéité entre ces éléments. En effet, si la géométrie des encoches ainsi que celle des barrettes ne correspond pas parfaitement, certaines barrettes ne sont pas correctement positionnées dans les encoches, ce qui entraîne des jeux avec la peau acoustiques. Les performances et l'étanchéité de la structure d'atténuation acoustiques sont alors dégradées.

Il est également connu du document JPS60244523 un appareil pour le moulage de films à formes ondulées.

### Exposé de l'invention

La présente invention a donc pour but principal de proposer une fabrication de panneaux multiéléments acoustiques complexes de grande taille à bas coût et à échelle industrielle pour réaliser des structures d'atténuation acoustique permettant notamment l'atténuation des basses fréquences dans un encombrement limité.

Selon un objet de l'invention, ce but est atteint grâce à une procédé de fabrication en continu d'un panneau multiéléments acoustiques complexes pour une structure d'atténuation acoustique comprenant un panneau multiéléments acoustiques complexes s'étendant suivant une direction horizontale et une direction verticale et compris selon la direction verticale entre une peau acoustique poreuse et une peau acoustique réfléchissante, ledit panneau multiéléments acoustiques complexes comprenant une pluralité d'éléments acoustiques complexes ayant chacune une forme se rétrécissant progressivement entre une base et un sommet et une pluralité de cloisons entourant chaque élément acoustique complexe de manière à former une pluralité de cellules acoustiques, lesdites cloisons s'étendant suivant la direction verticale à partir de la base des éléments acoustiques complexes.

Selon une caractéristique générale de l'invention, le procédé de fabrication comprend :
- un approvisionnement d'un film de résine thermoplastique en entrée d'un système d'emboutissage comprenant au moins un couple de cylindres complémentaires,
- un chauffage dudit film de résine thermoplastique en amont de l'entrée du système d'emboutissage,
- un passage dudit film de résine thermoplastique entre ledit au moins un couple de cylindres complémentaires, ledit couple de cylindres complémentaires comprenant un cylindre mâle présentant des dents s'étendant en saillie radiale du cylindre et un cylindre femelle présentant des cavités sur sa surface radiale, les cavités du cylindre femelle étant de formes complémentaires aux formes des dents du cylindre mâle, et
- une séparation du film embouti en sortie du système d'emboutissage à l'aide d'un séparateur disposé en sortie du système d'emboutissage entre le film embouti et le cylindre femelle pour favoriser le démoulage..

L'approvisionnement peut être réalisé à l'aide d'un système de convoyage pour éviter sa flexion, et le chauffage en amont du système d'emboutissage permet d'atteindre sur la zone utile du film, la température de fusion de la résine thermoplastique juste avant l'emboutissage du film.

Selon un premier aspect du procédé de fabrication, le procédé peut comprendre en outre un conditionnement du film de résine thermoplastique embouti produit en sortie du système d'emboutissage.

L'assemblage peut se faire soit dans la continuité de la ligne de fabrication des panneaux multiéléments acoustiques complexes, à la place du rouleau de conditionnement, ou bien à part.

Selon un deuxième aspect du procédé de fabrication, l'approvisionnement peut être réalisé en continu à l'aide d'un rouleau d'un film de résine thermoplastique ayant une épaisseur comprise entre 0,1 et 1,5 mm, et préférentiellement 0,1 à 0,8 mm.

L'approvisionnement en continu permet de réaliser des panneaux multiéléments de la longueur souhaitée en les coupants en sortie ou ultérieurement.

L'épaisseur de l'ordre du dixième de millimètre permet d'avoir l'épaisseur suffisante pour déformer le film par emboutissage pour créer les éléments acoustiques.

Selon un troisième aspect du procédé de fabrication, l'approvisionnement du film de résine thermoplastique en entrée du système d'emboutissage peut comprendre une poussée du film de résine thermoplastique par un système d'alimentation en film et une traction du film de résine thermoplastique par le système d'emboutissage, ladite poussée et ladite traction étant simultanée pour limiter les risques d'étirement non souhaité du film et les risques de déchirement.

La poussée du film de résine peut être réalisée par un convoyage ou une préhension des bords du film par un moyen de préhension, les bords pouvant être renforcés.

Selon un quatrième aspect du procédé de fabrication, le chauffage du film de résine thermoplastique peut comprendre un chauffage par conduction thermique et/ou un chauffage par four infrarouge.

Selon un cinquième aspect du procédé de fabrication, le chauffage du film de résine thermoplastique peut être appliqué sur les deux faces du film de résine thermoplastique, pour homogénéiser la température du film et pour chauffer plus rapidement le film.

Selon un sixième aspect du procédé de fabrication, le chauffage peut comprendre un premier chauffage du film de résine thermoplastique jusqu'à un premier seuil de température inférieur au seuil de fusion de la résine thermoplastique, et un second chauffage du film de résine thermoplastique jusqu'à un seuil de température supérieur au seuil de fusion de la résine thermoplastique, le premier chauffage étant réalisé avant le second chauffage et le second chauffage étant réalisé juste avant l'introduction du film de résine thermoplastique dans le d'emboutissage.

Cette décomposition du chauffage en deux phases de chauffage permet de minimiser les risques de déchirements, le temps pendant lequel une même zone du film de résine thermoplastique a une température au-delà de sa température de fusion étant réduit au minimum.

Selon un huitième aspect du procédé de fabrication, le procédé peut comprendre en outre, à l'issue du passage dans le système d'emboutissage, une émission de jets d'air depuis des canaux disposés dans le fond des cavités du cylindre femelle du système d'emboutissage pour aider au démoulage du film embouti.

Selon un neuvième aspect du procédé de fabrication, le procédé peut comprendre en outre un nettoyage des dents des cylindres mâles et des cavités des cylindres femelles du système d'emboutissage à l'aide d'un système de nettoyage monté sur chacun des cylindres et configuré pour éliminer tout résidu sur les dents ou les cavités avant qu'elles ne soient remises en contact avec le film.

Selon un dixième aspect du procédé de fabrication, le procédé peut en outre comprendre un contrôle de la température des cylindres du système d'emboutissage à une température inférieure à la température de cristallisation ou à la température de transition vitreuse de la résine thermoplastique.

Selon un onzième aspect du procédé de fabrication, le procédé peut comprendre en outre en amont du passage dans le système d'emboutissage, un passage du film de résine thermoplastique dans un système de préparation comprenant deux cylindres de presse identiques présentant des cavités en regard l'une de l'autre lors du fonctionnement du système de préparation et permettant de comprimer le film sur chaque endroit des cylindres de presse exemptes de cavité et de déplacer de la matière au niveau des zones du film situées en regard des cavités des cylindres de presse.

L'utilisation d'un système de préparation permet de créer une surépaisseur dans la zone où la matière sera amenée à être étirée lors de l'emboutissage pour contrecarrer cet effet et maintenir l'ensemble du pli à une épaisseur constante.

Dans un autre objet de l'invention, il est proposé une chaîne de fabrication en continu d'un panneau multiéléments acoustiques complexe pour une structure d'atténuation acoustique comprenant un panneau multiéléments acoustiques complexes s'étendant suivant une direction horizontal et une direction verticale et compris selon la direction verticale entre une peau acoustique poreuse et une peau acoustique réfléchissante, ledit panneau multiéléments acoustiques complexes comprenant une pluralité d'éléments acoustiques complexes ayant chacune une forme se rétrécissant progressivement entre une base et un sommet et une pluralité de cloisons entourant chaque élément acoustique complexe de manière à former une pluralité de cellules acoustiques, lesdites cloisons s'étendant suivant la direction verticale à partir de la base des éléments acoustiques complexes.

Selon une caractéristique générale de l'invention, la chaîne de fabrication comprend un système d'emboutissage comprenant au moins un couple de cylindres complémentaires, ledit couple de cylindres complémentaires comprenant un cylindre mâle présentant des dents s'étendant en saillie radiale du cylindre et un cylindre femelle présentant des cavités sur sa surface radiale, les cavités du cylindre femelle étant de formes complémentaires aux formes des dents du cylindre mâle, un moyen d'approvisionnement d'un film de résine thermoplastique en entrée dudit système d'emboutissage, un moyen de chauffage dudit film de résine thermo plastique en amont de l'entrée du système d'emboutissage, et un séparateur disposé en sortie du système d'emboutissage entre le film embouti et le cylindre femelle.

La chaîne de fabrication peut comprendre en outre un moyen de conditionnement du film de résine thermoplastique embouti produit en sortie du système d'emboutissage.

Selon un premier aspect de la chaîne de fabrication, le moyen d'approvisionnement peut comprendre un rouleau de film de résine thermoplastique ayant une épaisseur comprise entre 0,1 et 1,5 mm, préférentiellement entre 0,1 et 0,8 mm et encore plus préférentiellement entre 0,3 et 0,6 mm.

Selon un deuxième aspect de la chaîne de fabrication, le moyen d'approvisionnement du film de résine thermoplastique en entrée du système d'emboutissage peut comprendre un système d'alimentation configuré pour appliquer une poussée du film de résine thermoplastique synchronisée à une traction du film de résine thermoplastique appliquée par le système d'emboutissage.

Selon un troisième aspect de la chaîne de fabrication, le moyen de chauffage du film de résine thermoplastique peut comprendre un moyen de chauffage par conduction thermique et/ou un four infrarouge.

Selon un quatrième aspect de la chaîne de fabrication, le moyen de chauffage du film de résine thermoplastique peut être configuré pour chauffer les deux faces du film de résine thermoplastique à la fois.

Selon un cinquième aspect de la chaîne de fabrication, le moyen de chauffage peut comprendre un premier module de chauffage du film de résine thermoplastique jusqu'à un premier seuil de température inférieur au seuil de fusion de la résine thermoplastique, et un second module de chauffage du film de résine thermoplastique jusqu'à un seuil de température supérieur au seuil de fusion de la résine thermoplastique, le premier module de chauffage étant disposé en amont du second module de chauffage par rapport au sens de déplacement du film

Selon un septième aspect de la chaîne de fabrication, le cylindre femelle du système d'emboutissage peut comprendre des canaux disposés dans le fond de ses cavités depuis lesquels sont émis des jets d'air pour aider au démoulage du film embouti.

Selon un huitième aspect de la chaîne de fabrication, le système d'emboutissage peut comprendre un système de nettoyage monté sur chacun des cylindres du système d'emboutissage et configuré pour éliminer tout résidu sur les dents ou les cavités avant qu'elles ne soient remises en contact avec le film.

Selon un neuvième aspect de la chaîne de fabrication, la chaîne de fabrication peut comprendre un dispositif de contrôle de la température des cylindres du système d'emboutissage à une température inférieure à la température de cristallisation ou à la température de transition vitreuse de la résine thermoplastique.

Selon un dixième aspect de la chaîne de fabrication, le matériau du film de résine thermoplastique peut être choisi parmi les polyaryléthercétones (PAEK), les polusulfone (PSU), les polysulfures de phynylène (PPS), les polyétherimides (PEI), les polycarbonates (PC) et les polyamides (PA)
Selon un onzième aspect de la chaîne de fabrication, la résine thermoplastique dudit film peut comprendre des fibres sur au moins une partie de sa section, les fibres étant en verre, en carbone, ou en aramide.

Selon un douzième aspect de la chaîne de fabrication, les éléments acoustiques complexes du panneau peuvent présenter une forme pyramidale, conique ou spinale.

Selon un treizième aspect de la chaîne de fabrication, la chaîne de fabrication peut comprendre en outre en amont du système d'emboutissage, un système de préparation comprenant deux cylindres de presse identiques présentant des cavités en regard l'une de l'autre lors du fonctionnement du système de préparation et permettant de comprimer le film sur chaque endroit des cylindres de presse exemptes de cavité et de déplacer de la matière au niveau des zones du film situées en regard des cavités des cylindres de presse.

Selon un autre aspect de la chaîne de fabrication, les dents du cylindre mâle dudit couple de cylindres complémentaires peuvent comprendre chacune une pointe configurée pour percer le film de résine thermoplastique.

Lesdits structures d'atténuation acoustique formées à partir des panneaux multiéléments acoustiques comprennent de préférence un panneau multiéléments acoustiques complexes s'étendant suivant une direction horizontal et une direction verticale et compris entre au moins une peau acoustiquement réfléchissante et au moins une peau acoustiquement poreuse, ledit panneau multiéléments acoustiques complexes comprenant une pluralité d'éléments acoustiques complexes ayant chacune une forme se rétrécissant progressivement entre une base et un sommet et une pluralité de cloisons entourant chaque élément acoustique complexe de manière à former une pluralité de cellules acoustiques, lesdites cloisons s'étendant suivant la direction verticale à partir de la base des éléments acoustiques complexes, caractérisée en ce que la base de chaque élément acoustique complexe est en contact continu avec la base des éléments acoustiques complexes adjacents de manière à former un réseau continu de bords et en ce qu'une extrémité des cloisons est en contact avec les bords du réseau continu de bords.

L'assemblage des structures d'atténuation acoustique comprend notamment un assemblage des cloisons au(x) panneau(x) multiéléments acoustiques complexes par collage ou soudure.

Grâce à la présence d'éléments acoustiques complexes entourés par des cloisons, on augmente la hauteur projetée des cellules. La structure d'atténuation acoustique de l'invention est ainsi apte à atténuer des ondes sonores à plus basses fréquence tout en présentant un encombrement réduit. En outre, le maintien en position des éléments acoustiques complexes dans les alvéoles formées par les cloisons est parfaitement assuré car les bases des cellules acoustiques forment un réseau continu de bords en contact avec les extrémités des cloisons, ce qui empêche tout risque d'apparition de jeu en particulier suivant la direction verticale. L'étanchéité entre les éléments acoustiques complexes, les cloisons et la peau acoustique est en outre ainsi parfaitement maîtrisée.

Les éléments acoustiques complexes présentent une forme pyramidale, conique ou spinale.

Au moins le panneau multiéléments acoustiques complexes est en un matériau thermoplastique ou thermodurcissable chargé ou non. Cela permet de maîtriser la masse globale de la structure car les éléments acoustiques complexes peuvent être formés par injection et présenter des épaisseurs très fines.

La hauteur des éléments acoustiques complexes est comprise entre 10% et 99% de la hauteur des cellules acoustiques suivant la direction verticale.

### Brève description des dessins

[Fig. 1] La figure 1 est une vue schématique éclatée en perspective d'une structure d'atténuation acoustique selon un mode de réalisation de l'invention.
[Fig. 2] La figure 2 est une vue schématique en coupe de la structure d'atténuation acoustique de la figure 1 une fois assemblée.
[Fig. 3] La figure 3 est une représentation schématique d'une chaîne de fabrication ne faisant pas partie de l'invention.
[Fig. 4] La figure 4 présente un logigramme d'un procédé de fabrication d'un panneau multiéléments acoustiques selon un mode de mise en oeuvre de l'invention.
[Fig. 5] La figure 5 est une représentation schématique d'une chaîne de fabrication selon un deuxième mode de réalisation de l'invention.
[Fig. 6] La figure 6 est une représentation schématique d'une chaîne de fabrication ne faisant pas partie de l'invention.
[Fig. 7] La figure 7 est une représentation schématique partielle d'une chaîne de fabrication selon un quatrième mode de réalisation de l'invention ne faisant pas partie de l'invention.
[Fig. 8] La figure 8 présente un panneau multiéléments acoustiques complexes selon un seconde mode de réalisation.

### Description des modes de réalisation

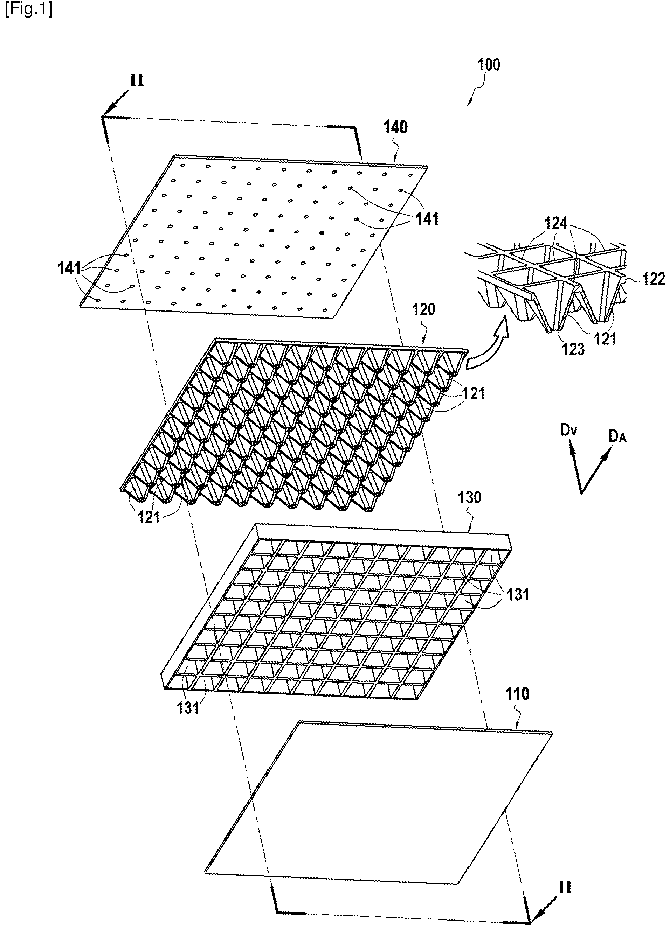

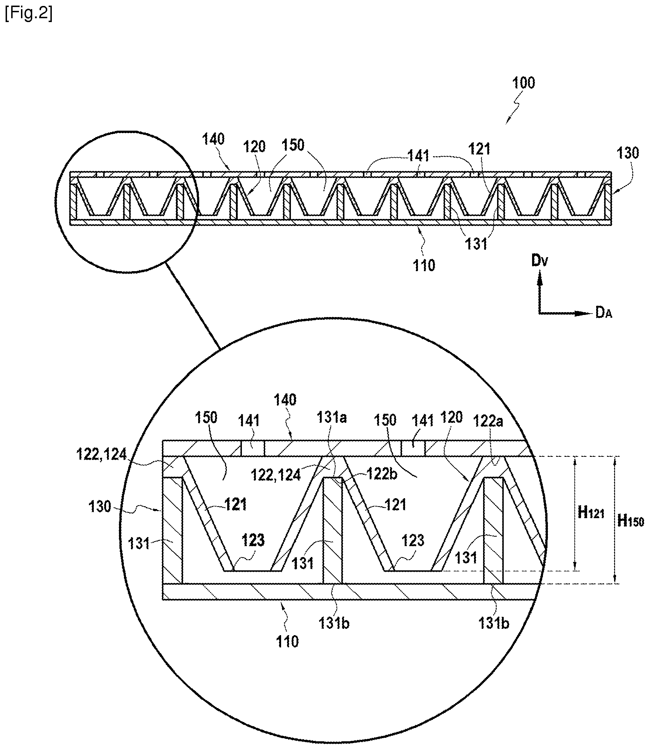

Les figures 1 et 2 représentent une structure d'atténuation acoustique 100 conformément à un mode de réalisation de l'invention. La structure d'atténuation acoustique 100 comprend ici une peau ou plaque de fermeture 110, un panneau multiéléments acoustiques complexes 120, une pluralité de cloisons 131 et une peau ou plaque acoustique 140.

La peau de fermeture 110 correspond à une surface pleine destinée à réfléchir les ondes sonores entrant dans la structure d'atténuation acoustique. La peau de fermeture peut être un élément constitutif de la structure d'atténuation acoustique comme dans l'exemple décrit ici ou correspondre à une structure d'un objet, par exemple un moteur d'avion. Dans ce dernier cas, la structure d'atténuation acoustique de l'invention ne comporte pas de peau de fermeture et est directement montée sur la structure de l'objet.

La peau acoustique 140 a pour fonction de laisser passer les ondes sonores à atténuer à l'intérieur de la structure d'atténuation acoustique 100. A cet effet et dans l'exemple décrit ici, la peau acoustique 140 comprend une pluralité de perforations 141.

Le panneau multiéléments acoustiques complexes 120 est formé en une seule pièce et s'étend en longueur et en largeur suivant une direction horizontale D_{H} et en hauteur suivant une direction verticale D_{V}. Le panneau multiéléments acoustiques complexes comprend une pluralité d'éléments acoustiques complexes 121 ayant chacune une forme se rétrécissant progressivement entre une base 122 et un sommet 123. Dans l'exemple décrit ici, les éléments acoustiques complexes 121 présentent une forme pyramidale. La base 122 de chaque élément acoustique complexe121 est en contact continu avec la base des éléments acoustiques complexes adjacents de manière à former un réseau continu de bords 124.

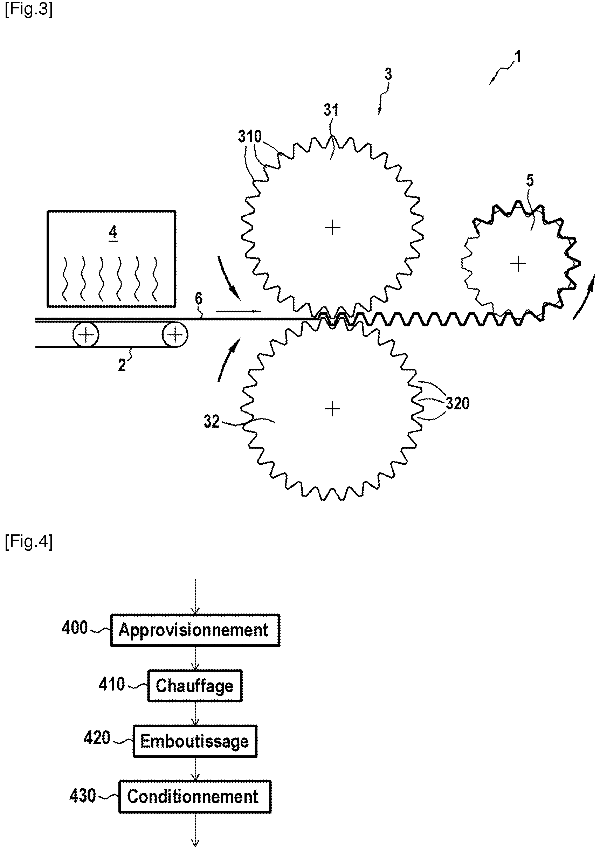

Dans l'exemple illustré sur la figure 4, les éléments acoustiques 121 du panneau multiéléments acoustiques complexes 120 sont de forme pyramidale à base carrée. Dans des variantes de réalisation, ils peuvent être pyramidales à base polygonale ou encore conique à base circulaire.

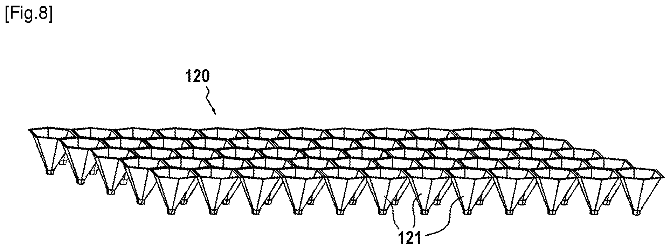

Sur la figure 8 est illustré un exemple de mode de réalisation un panneau multiéléments acoustiques complexes 120 doté d'éléments acoustiques 120 de forme pyramidale à base hexagonale. La base hexagonale des pyramides formées par les éléments acoustiques 121 du panneau 120 permettent d'avoir des éléments acoustiques 121 répartis selon un réseau en quinconce sur le panneau 120, tandis que sur la figure 1 les éléments acoustiques 121 à base carrée sont répartis selon un réseau orthonormé.

Dans l'exemple de réalisation décrit ici, la pluralité de cloisons 131 est réalisée en une seule pièce, à savoir un réseau de nervures 130 qui une fois assemblé avec le panneau multiéléments acoustiques complexes 120 forme les cloisons autour des éléments acoustiques complexes 121.

Toujours dans l'exemple décrit ici, la structure d'atténuation acoustique 100 est réalisée en assemblant le panneau multiéléments acoustiques complexes 120 avec la pluralité de cloisons 131 en une seule pièce, le bord supérieur 131a des cloisons 131 étant fixés, par exemple par collage ou soudage, sur la portion inférieure 122b des bases 122 des éléments acoustiques complexes 121 (figure 2). La pluralité d'éléments acoustiques complexes étant formée en une seule pièce au sein du panneau multiéléments acoustiques complexes et la pluralité de cloisons étant elle aussi formée en une seule pièce, l'assemblage entre ces deux éléments est grandement facilité par l'auto-positionnement des éléments acoustiques complexes avec les cloisons.

La peau acoustique 140 est fixée, par exemple par collage ou soudage, sur le bord inférieur 131b des cloisons 131 tandis que la peau de fermeture 110 est fixée, par collage ou soudage, sur la portion supérieure 122a des bases 122 des éléments acoustiques complexes 121 correspondant à la surface exposée des bords 124. Ainsi, la peau acoustique et la peau de fermeture sont chacune fixées sur un support parfaitement plan suivant la direction horizontale D_{H}, ce qui permet d'assurer une très bonne étanchéité entre les peaux et l'assemblage du panneau multiéléments acoustiques complexes avec la pluralité de cloisons.

Une fois assemblée, la structure d'atténuation 100 comprend une pluralité de cellules acoustiques 150 chacune formée par un élément acoustique complexe 121 et les cloisons 131 qui l'entourent (figure 2). La hauteur H₁₂₁ des cellules acoustiques 121 est inférieure à la hauteur H₁₅₀ des cellules acoustiques 150. Plus précisément, la hauteur H₁₂₁ des cellules acoustiques est comprise entre 10% et 99% de la hauteur H₁₅₀ des cellules acoustiques suivant la direction verticale.

Sur la figure 3 est présentée schématiquement une chaîne de fabrication pour réaliser le panneau multiéléments acoustiques complexes 120 de la structure d'atténuation acoustique 100 des figures 1 et 2 ne faisant pas partie de l'invention.

La chaîne 1 de fabrication d'un panneau multiéléments acoustiques 120 comprend un tapis convoyeur 2, un système d'emboutissage 3, un dispositif de chauffage 4 et un rouleau de conditionnement 5.

Le système d'emboutissage 3 comprend un cylindre mâle 31 présentant des dents 310 s'étendant en saillie radiale du cylindre et un cylindre femelle 32 présentant des cavités 320 sur sa surface radiale, les cavités 320 du cylindre femelle 32 étant de formes complémentaires aux formes des dents 310 du cylindre mâle 31.

Le tapis convoyeur 2 transporte un film 6 de résine thermoplastique jusqu'à l'entrée du système d'emboutissage 3. Le tapis convoyeur pousse ainsi le film 6 jusqu'à ce qu'il soit pris entres le cylindre mâle 31 et le cylindre femelle 32 du système d'emboutissage 3 qui applique une force de traction sur le film 6 synchronisée avec la poussée du tapis convoyeur 2.

Le film 6 de résine thermoplastique est fabriqué à partir d'un matériau choisi parmi les polyaryléthercétones (PAEK), les polusulfone (PSU), les polysulfures de phynylène (PPS), les polyétherimides (PEI), les polycarbonates (PC) et les polyamides (PA). Le film 6 présente une épaisseur comprise entre 0,1 et 1,5 mm, et peut provenir d'un rouleau de film résine dont le déroulement résulte du mouvement du tapis convoyeur 2 ou bien est synchronisé avec le tapis convoyeur 2.

Le dispositif de chauffage 4 est disposé en amont du système d'emboutissage 3. Il est configuré pour coopérer avec le tapis convoyeur 2. Il comprend ainsi un premier module de chauffage placé dans le tapis convoyeur 2 pour chauffer une première face du film 6 posée sur le tapis convoyeur 2 et un second mode de chauffage disposé en regard du tapis convoyeur 2 pour chauffer une seconde face du film 6 opposée à la première face. Le premier module de chauffage est un module de conduction thermique permettant de chauffer le tapis convoyeur 2. Le second module de chauffage est un four infrarouge. Les deux modules de chauffage sont configurés pour chauffer le film 6 pour qu'il soit à une température supérieure à un seuil de température supérieur au seuil de fusion de la résine thermoplastique du film 6 lorsque le film 6 sort de la zone de traitement du dispositif de chauffage 4, c'est-à-dire juste avant qu'il n'entre dans le système d'emboutissage 3.

Les cylindres mâle et femelle 31 et 32 du système d'emboutissage 3 sont pilotés par une unité de contrôle en température des cylindres 31 et 32 du système d'emboutissage 3 permettant de maintenir les cylindres mâle et femelles 31 et 32 à une température inférieure à la température de cristallisation ou à la température de transition vitreuse de la résine thermoplastique du film 6.

Le rouleau de conditionnement 5 permet de récupérer le panneau multiéléments acoustiques formés et de le conditionner sans le découper pour ainsi pouvoir découper n'importe quelle longueur de panneau souhaitée.

Sur la figure 4 est présenté un logigramme d'un procédé de fabrication d'un panneau multiéléments 120 à partir d'un film 6 et de la chaîne de fabrication 1 de la figure 3.

Dans une première étape 400 du procédé de fabrication, le film 6 de résine est approvisionné par le tapis convoyeur 2 jusqu'en entrée du système d'emboutissage 3.

Dans une deuxième étape 410, pendant son transport par le tapis convoyeur 2, le film 6 est chauffé par le dispositif de chauffage 4 jusqu'à une température supérieure à la température de fusion de la résine thermoplastique du film 6.

Le chauffage peut être décomposé en au moins deux séquences de chauffage, via notamment au moins deux premiers modules de chauffage et deux seconds modules de chauffage. Lors de la première séquence de chauffage, le film est chauffé à une température légèrement inférieure à la température de fusion de la résine thermoplastique, et lors de la deuxième séquence de chauffage, ou de la dernière séquence dans le cas où il y a plus de deux séquences de chauffage, le film est finalement amené jusqu'à une température supérieure à la température de fusion de la résine thermoplastique du film 6.

Dans une troisième étape 420, le film 6 ainsi chauffé est introduit dans le système d'emboutissage 3. Le film 6 chauffé est embouti entre les dents 310 du cylindre mâle 31 et les cavités 320 du cylindre femelle 32, chaque dent 310 pénétrant dans une cavité 320 en poussant avec elle de la matière du film 6 pour former une forme acoustique. La vitesse de rotation des cylindres mâle et femelle 31 et 32 est identique et le nombre de dents 310 du cylindre mâle 31 correspond au nombre de cavités 320 du cylindre femelle 32.

Dans une quatrième étape 430, le film 6 embouti est démoulé et sorti du système d'emboutissage pour être conditionné sur le rouleau de conditionnement 5. Lors du conditionnement un système d'apport d'air frais peut être mis en place entre le système d'emboutissage 3 et le rouleau de conditionnement 5 pour abaisser la température du produit avant enroulement.

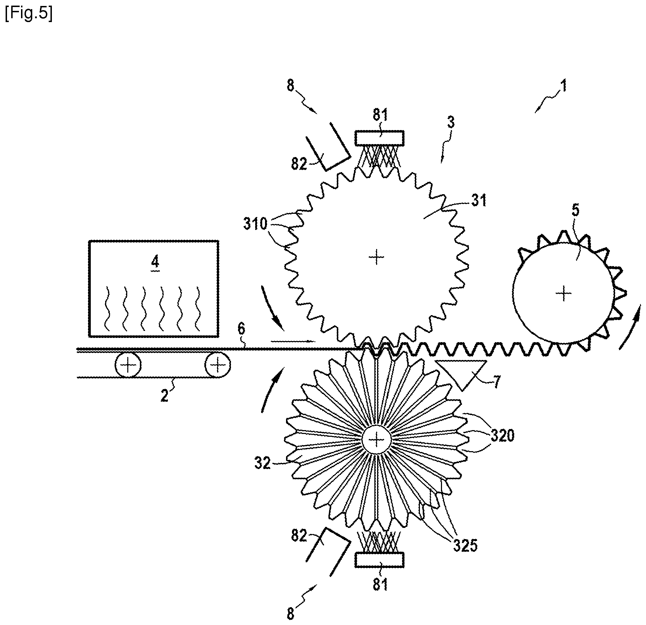

Sur la figure 5 est présentée schématiquement une chaîne de fabrication pour réaliser le panneau multiéléments acoustiques complexes 120 de la structure d'atténuation acoustique 100 des figures 1 et 2 selon un deuxième mode de réalisation.

Le deuxième mode de réalisation illustré sur la figure 5 diffère du premier mode de réalisation illustré sur la figure 3 en ce que le système d'emboutissage 3 comprend plusieurs éléments supplémentaires.

Le système d'emboutissage 3 comprend notamment un séparateur 7 disposé en sortie entre le film embouti et le cylindre femelle 32. Le séparateur permet de s'assurer du démoulage du film de l'intérieur des cavités 320.

En outre, le cylindre femelle 32 du système d'emboutissage 3 comprend des canaux 325 disposés dans le fond de ses cavités 320 et alimentés par un flux d'air. Les canaux 325 permettent ainsi de délivrer des jets d'air depuis le fond des cavités 320 et ainsi d'aider au démoulage du film embouti.

Le système d'emboutissage 3 comprend également un système de nettoyage 8 monté sur chacun des cylindres mâle et femelle 31 et 32 et configuré pour éliminer tout résidu sur les dents 310 et les cavités 320 avant qu'elles ne soient remises en contact avec le film 6. Le système de nettoyage 8 comprend pour chaque cylindre un dispositif de brossage et un dispositif d'aspiration permettant de récupérer les éléments ainsi détachés.

En outre, dans ce mode de réalisation, le rouleau de conditionnement 5 est un cylindre non denté.

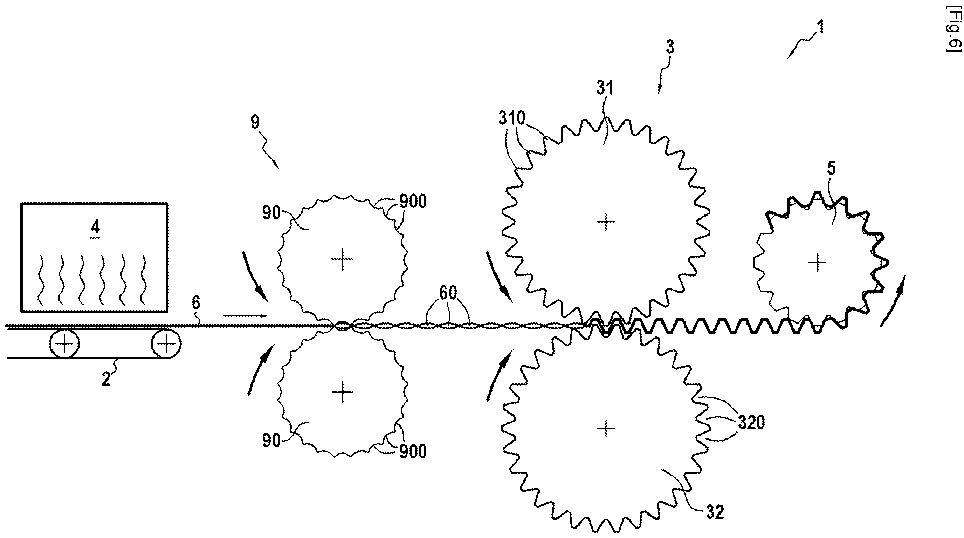

Sur la figure 6 est présentée schématiquement une chaîne de fabrication pour réaliser le panneau multiéléments acoustiques complexes 120 de la structure d'atténuation acoustique 100 des figures 1 et 2 selon un troisième mode de réalisation. réalisation ne faisant pas partie de l'invention.

Le troisième mode de réalisation illustré sur la figure 6 diffère du premier mode de réalisation illustré sur la figure 3 en ce que la chaîne de fabrication 1 comprend en outre en amont du système d'emboutissage 3, un système de préparation 9 comprenant deux cylindres de presse 90 identiques présentant des cavités 900 en regard l'une de l'autre lors du fonctionnement du système de préparation 9 et comprimant le film 6 sur chaque endroit des cylindres de presse exemptes de cavité 900 et déplaçant la matière résultant de la compression au niveau des zones du film 6 situées en regard des cavités 900 des cylindres de presse 9.

On obtient ainsi en sortie du système de préparation 9 un film présentant des mamelons 60, l'épaisseur du film 6 entre les mamelons 60 étant plus fine que l'épaisseur du film 6 en entrée du système de préparation 9.

La chaîne de fabrication 1 est configurée pour que chaque mamelon se retrouve dans le système d'emboutissage 3 entre une dent 310 du cylindre mâle 31 et une cavité du cylindre femelle 32. La surépaisseur de matière au niveau de chaque mamelon sera étirée lors de l'emboutissage. Cette surépaisseur avant l'emboutissage permet ainsi de réduire voire de supprimer les risques de déchirement du film lors de sa déformation par emboutissage, et aussi d'obtenir un panneau multiéléments acoustiques ayant une épaisseur uniforme que ce soit pour l'épaisseur du film entre les structures acoustiques créées par l'emboutissage que l'épaisseur des parois des structures acoustiques.

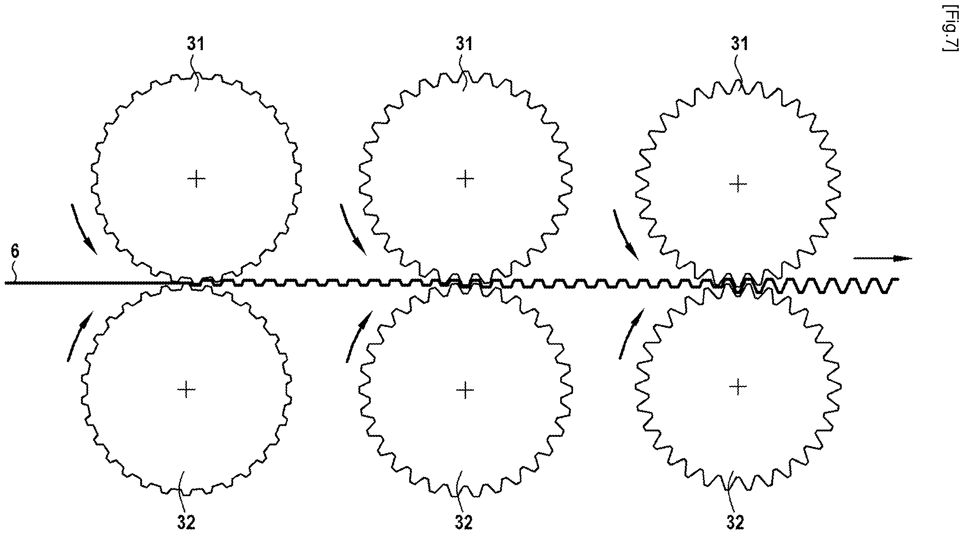

Sur la figure 7 est présentée schématiquement une chaîne de fabrication pour réaliser le panneau multiéléments acoustiques complexes 120 de la structure d'atténuation acoustique 100 des figures 1 et 2 selon un quatrième mode de réalisation ne faisant pas partie de l'invention.

Le quatrième mode de réalisation illustré sur la figure 7 diffère du premier mode de réalisation illustré sur la figure 3 en ce que le système d'emboutissage 3 comprend plusieurs couples de cylindres. Sur la figure 7, le système d'emboutissage 3 comprend trois couples de cylindre, c'est-à-dire trois cylindres mâles 31 couplés à trois cylindres femelles 32, pour réaliser un emboutissage progressif.

Selon le sens d'acheminement du film 6, les cylindres mâles 31 comprennent des dents 310 de plus en plus grandes et les cylindres femelles 32 comprennent des cavités 320 de plus en plus profondes.

Le procédé et la chaîne de fabrication ne sont pas limités aux modes de réalisations illustrés et peuvent comprendre toutes les combinaisons possibles. Notamment, outre les pyramides à base carré ou hexagonale décrite, l'invention peut également s'appliquer dans le cas de pyramides à base polygonale à n côtés ou un cône à base circulaire.

La chaîne de fabrication de panneaux multiéléments acoustiques et le procédé associé permettent ainsi une fabrication de panneaux multiéléments acoustiques complexes de grande taille à bas coût et à échelle industrielle pour réaliser des structures d'atténuation acoustique permettant notamment l'atténuation des basses fréquences dans un encombrement limité.

## Revendications

1. Procédé de fabrication en continu d'un panneau multiéléments acoustiques complexes (120) pour une structure d'atténuation acoustique (100) comprenant un panneau multiéléments acoustiques complexes (120) s'étendant suivant une direction horizontale (D_{H}) et une direction verticale (D_{V}) et compris selon la direction verticale (D_{V}) entre une peau acoustique (140) poreuse et une peau acoustique réfléchissante (110), ledit panneau multiéléments acoustiques complexes (120) comprenant une pluralité d'éléments acoustiques complexes (121) ayant chacune une forme se rétrécissant progressivement entre une base (122) et un sommet (123) et une pluralité de cloisons (131) entourant chaque élément acoustique complexe de manière à former une pluralité de cellules acoustiques (150), lesdites cloisons s'étendant suivant la direction verticale (DV) à partir de la base (122) des éléments acoustiques complexes (121),
**caractérisé en ce que** le procédé de fabrication comprend :
- un approvisionnement (400) d'un film de résine thermoplastique en entrée d'un système d'emboutissage comprenant au moins un couple de cylindres complémentaires,
- un chauffage (410) dudit film de résine thermoplastique en amont de l'entrée du système d'emboutissage, et
- un passage (420) dudit film de résine thermoplastique entre ledit au moins un couple de cylindres complémentaires, ledit couple de cylindres complémentaires comprenant un cylindre mâle présentant des dents s'étendant en saillie radiale du cylindre et un cylindre femelle présentant des cavités sur sa surface radiale, les cavités du cylindre femelle étant de formes complémentaires aux formes des dents du cylindre mâle, et
- une séparation du film embouti en sortie du système d'emboutissage à l'aide d'un séparateur disposé en sortie du système d'emboutissage entre le film embouti et le cylindre femelle.

2. Procédé selon la revendication 1, comprenant en outre un conditionnement (430) du film de résine thermoplastique embouti produit en sortie du système d'emboutissage.

3. Procédé selon l'une des revendications 1 ou 2, dans lequel l'approvisionnement (310) est réalisé en continu à l'aide d'un rouleau d'un film de résine thermoplastique ayant une épaisseur comprise entre 0,1 et 1,5 mm.

4. Procédé selon l'une quelconque des revendications 1 à 3, dans lequel l'approvisionnement (410) du film de résine thermoplastique en entrée du système d'emboutissage comprend une poussée du film de résine thermoplastique par un système d'alimentation en film et une traction du film de résine thermoplastique par le système d'emboutissage, ladite poussée et ladite traction étant simultanée pour limiter les risques d'étirement non souhaité du film.

5. Procédé selon l'une quelconque des revendications 1 à 4, dans lequel le chauffage (420) du film de résine thermoplastique comprend un chauffage par conduction thermique et/ou un chauffage par four infrarouge.

6. Procédé selon l'une quelconque des revendications 1 à 5, dans lequel le chauffage (420) du film de résine thermoplastique est appliqué sur les deux faces du film de résine thermoplastique.

7. Procédé selon l'une quelconque des revendications 1 à 6, dans lequel le chauffage (420) comprend un premier chauffage du film de résine thermoplastique jusqu'à un premier seuil de température inférieur au seuil de fusion de la résine thermoplastique, et un second chauffage du film de résine thermoplastique jusqu'à un seuil de température supérieur au seuil de fusion de la résine thermoplastique, le premier chauffage étant réalisé avant le second chauffage et le second chauffage étant réalisé juste avant l'introduction du film de résine thermoplastique dans le système d'emboutissage.

8. Procédé selon l'une quelconque des revendications 1 à 7, comprenant en outre, à l'issue du passage (430) dans le système d'emboutissage, une émission de jets d'air depuis des canaux disposés dans le fond des cavités du cylindre femelle du système d'emboutissage pour aider au démoulage du film embouti.

9. Procédé selon l'une quelconque des revendications 1 à 8, comprenant en outre un nettoyage des dents des cylindres mâles et des cavités des cylindres femelles du système d'emboutissage à l'aide d'un système de nettoyage monté sur chacun des cylindres et configuré pour éliminer tout résidu sur les dents ou les cavités avant qu'elles ne soient remises en contact avec le film.

10. Procédé selon l'une quelconque des revendications 1 à 9, comprenant un contrôle de la température des cylindres du système d'emboutissage à une température inférieure à la température de cristallisation ou à la température de transition vitreuse de la résine thermoplastique.

11. Procédé selon l'une des revendications 1 à 10, comprenant en outre en amont du passage (430) dans le système d'emboutissage, un passage du film de résine thermoplastique dans un système de préparation comprenant deux cylindres de presse identiques présentant des cavités en regard l'une de l'autre lors du fonctionnement du système de préparation et permettant de comprimer le film sur chaque endroit des cylindres de presse exemptes de cavité et de déplacer de la matière au niveau des zones (60) du film situées en regard des cavités des cylindres de presse.

12. Chaîne (1) de fabrication en continu d'un panneau multiéléments acoustiques complexes (120) pour une structure d'atténuation acoustique (100) comprenant un panneau multiéléments acoustiques complexes (120) s'étendant suivant une direction horizontale (D_{H}) et une direction verticale (D_{V}) et compris selon la direction verticale (D_{V}) entre une peau acoustique (140) poreuse et une peau acoustique réfléchissante (110), ledit panneau multiéléments acoustiques complexes (120) comprenant une pluralité d'éléments acoustiques complexes (121) ayant chacune une forme se rétrécissant progressivement entre une base (122) et un sommet (123) et une pluralité de cloisons (131) entourant chaque élément acoustique complexe de manière à former une pluralité de cellules acoustiques (150), lesdites cloisons s'étendant suivant la direction verticale (DV) à partir de la base (122) des éléments acoustiques complexes (121),
**caractérisé en ce que** la chaîne (1) de fabrication comprend :
- un système d'emboutissage (3) comprenant au moins un couple de cylindres complémentaires (31, 32), ledit couple de cylindres complémentaires comprenant un cylindre mâle (31) présentant des dents (310) s'étendant en saillie radiale du cylindre mâle (31) et un cylindre femelle (32) présentant des cavités (320) sur sa surface radiale, les cavités (320) du cylindre femelle (32) étant de formes complémentaires aux formes des dents (310) du cylindre mâle (31),
- un moyen d'approvisionnement (2) d'un film (6) de résine thermoplastique en entrée dudit système d'emboutissage (3),
- un moyen de chauffage (4) dudit film (6) de résine thermoplastique en amont de l'entrée du système d'emboutissage (3),
- le système d'emboutissage (3) comprenant en outre un séparateur (7) disposé en sortie entre le film embouti et le cylindre femelle (32).

13. Chaîne (1) de fabrication selon la revendication 12, comprenant en outre un moyen de conditionnement (5) du film (6) de résine thermoplastique embouti produit en sortie du système d'emboutissage (3).

14. Chaîne (1) de fabrication selon l'une des revendications 12 ou 13, dans laquelle le moyen d'approvisionnement (2) comprend un rouleau de film (6) de résine thermoplastique ayant une épaisseur comprise entre 0,1 et 1,5 mm.

15. Chaîne (1) de fabrication selon l'une quelconque des revendications 12 à 14, dans laquelle le moyen d'approvisionnement(4) du film (6) de résine thermoplastique en entrée du système d'emboutissage (3) comprend un système d'alimentation configuré pour appliquer une poussée du film de résine thermoplastique synchronisée à une traction du film (6) de résine thermoplastique appliquée par le système d'emboutissage (3).

16. Chaîne (1) de fabrication selon l'une quelconque des revendications 12 à 15, dans laquelle le moyen de chauffage (4) du film (6) de résine thermoplastique comprend un moyen de chauffage (4) par conduction thermique et/ou un four infrarouge.

17. Chaîne (1) de fabrication selon l'une quelconque des revendications 12 à 16, dans laquelle le moyen de chauffage (4) du film (6) de résine thermoplastique est configuré pour chauffer les deux faces du film (6) de résine thermoplastique à la fois.

18. Chaîne (1) de fabrication selon l'une quelconque des revendications 12 à 17, dans laquelle le moyen de chauffage (4) comprend un premier module de chauffage du film (6) de résine thermoplastique jusqu'à un premier seuil de température inférieur au seuil de fusion de la résine thermoplastique, et un second module de chauffage du film (6) de résine thermoplastique jusqu'à un seuil de température supérieur au seuil de fusion de la résine thermoplastique, le premier module de chauffage étant disposé en amont du second module de chauffage par rapport au sens de déplacement du film (6).

19. Chaîne (1) de fabrication selon l'une quelconque des revendications 12 à 18, dans laquelle le cylindre femelle (32) du système d'emboutissage (3) comprend des canaux (325) disposés dans le fond de ses cavités (320) depuis lesquelles sont émis des jets d'air pour aider au démoulage du film embouti.

20. Chaîne (1) de fabrication selon l'une quelconque des revendications 12 à 19, dans laquelle le système d'emboutissage (3) comprend un système de nettoyage (8) monté sur chacun des cylindres (31, 32) du système d'emboutissage (3) et configuré pour éliminer tout résidu sur les dents (310) ou les cavités (320) avant qu'elles ne soient remises en contact avec le film (6).

21. Chaîne (1) de fabrication selon l'une quelconque des revendications 12 à 20, comprenant un dispositif de contrôle de la température des cylindres (31, 32) du système d'emboutissage (3) à une température inférieure à la température de cristallisation ou à la température de transition vitreuse de la résine thermoplastique du film (6).

22. Chaîne (1) de fabrication selon l'une quelconque des revendications 12 à 21, dans laquelle le matériau du film (6)de résine thermoplastique est choisi parmi les polyaryléthercétones (PAEK), les polusulfone (PSU), les polysulfures de phynylène (PPS), les polyétherimides (PEI), les polycarbonates (PC) et les polyamides (PA).

23. Chaîne (1) de fabrication selon l'une quelconque des revendications 12 à 22, dans laquelle la résine thermoplastique dudit film (6) comprend des fibres sur au moins une partie de sa section, les fibres étant en verre, en carbone, ou en aramide.

24. Chaîne (1) de fabrication selon l'une quelconque des revendications 12 à 23, dans laquelle les éléments acoustiques complexes du panneau (121) présentent une forme pyramidale, conique ou spinale.

25. Chaîne (1) de fabrication selon l'une des revendications 12 à 24, comprenant en outre en amont du système d'emboutissage (3), un système de préparation (9) comprenant deux cylindres de presse (90) identiques présentant des cavités (900) en regard l'une de l'autre lors du fonctionnement du système de préparation (9) et permettant de comprimer le film (6) sur chaque endroit des cylindres de presse (90) exemptes de cavité (900) et de déplacer de la matière au niveau des zones (60) du film situées en regard des cavités (900) des cylindres de presse (90).

26. Chaîne de fabrication selon l'une des revendications 12 à 25, dans lequel les dents (310) du cylindre mâle (31) dudit couple de cylindres complémentaires comprennent chacune une pointe configurée pour percer le film de résine thermoplastique.

## Patentansprüche

1. Verfahren zur kontinuierlichen Herstellung einer komplexen Mehrelement-Akustikplatte (120) für eine Akustikdämmungsstruktur (100), umfassend eine komplexe Mehrelement-Akustikplatte (120), die sich in einer horizontalen Richtung (D_{H}) und einer vertikalen Richtung (D_{V}) erstreckt und in der vertikalen Richtung (D_{V}) zwischen einer porösen Akustikhaut (140) und einer reflektierenden Akustikhaut (110) liegt, wobei die komplexe Mehrelement-Akustikplatte (120) mehrere komplexe Akustikelemente (121), die jeweils eine Form aufweisen, die sich allmählich zwischen einer Basis (122) und einer Oberseite (123) verjüngt, und mehrere Trennwände (131), die jedes komplexe akustische Element umgeben, um mehrere Akustikzellen (150) zu bilden, umfasst, wobei sich die Trennwände in der vertikalen Richtung (DV) von der Basis (122) der komplexen Akustikelemente (121) erstrecken,
**dadurch gekennzeichnet, dass** der Herstellungsprozess umfasst:
- Bereitstellen (400) eines thermoplastischen Harzfilms an dem Eingang eines Stanzsystems, das mindestens ein Paar von komplementären Zylindern umfasst,
- Erhitzen (410) des thermoplastischen Harzfilms vor dem Eingang des Stanzsystems und
- Durchlässen (420) des thermoplastischen Harzfilms zwischen dem mindestens einen Paar von komplementären Zylindern, wobei das Paar von komplementären Zylindern einen Steckzylinder mit Zähnen, die sich radial von dem Zylinder vorragend erstrecken, und einen Aufnahmezylinder mit Hohlräumen auf seiner radialen Oberfläche umfasst, wobei die Hohlräume des Aufnahmezylinders komplementäre Formen zu den Formen der Zähne des Steckzylinders aufweisen, und
- Trennen des gestanzten Films an dem Ausgang des Stanzsystems mit Hilfe einer Trennvorrichtung, die an dem Ausgang des Stanzsystems zwischen dem gestanzten Film und dem Aufnahmezylinder angeordnet ist.

2. Verfahren nach Anspruch 1, ferner umfassend ein Konditionieren (430) des gestanzten thermoplastischen Harzfilms, der an dem Ausgang des Stanzsystems produziert wird.

3. Verfahren nach einem der Ansprüche 1 oder 2, wobei das Bereitstellen (310) kontinuierlich mit Hilfe einer Rolle aus einem thermoplastischen Harzfilm mit einer Dicke, die zwischen 0,1 und 1,5 mm liegt, umgesetzt wird.

4. Verfahren nach einem der Ansprüche 1 bis 3, wobei das Bereitstellen (410) des thermoplastischen Harzfilms an dem Eingang des Stanzsystems ein Schieben des thermoplastischen Harzfilms durch ein Filmzuführsystem und Ziehen des thermoplastischen Harzfilms durch das Stanzsystem umfasst, wobei das Schieben und das Ziehen gleichzeitig erfolgen, um das Risiko von unerwünschter Dehnung des Films zu begrenzen.

5. Verfahren nach einem der Ansprüche 1 bis 4, wobei das Erhitzen (420) des thermoplastischen Harzfilms ein Erhitzen durch Wärmeleitung und/oder Erhitzen durch Infrarotofen umfasst.

6. Verfahren nach einem der Ansprüche 1 bis 5, wobei das Erhitzen (420) des thermoplastischen Harzfilms auf den zwei Seiten des thermoplastischen Harzfilms angewendet wird.

7. Verfahren nach einem der Ansprüche 1 bis 6, wobei das Erhitzen (420) ein erstes Erhitzen des thermoplastischen Harzfilms auf einen ersten Temperaturschwellenwert unterhalb des Schmelzschwellenwertes des thermoplastischen Harzes und ein zweites Erhitzen des thermoplastischen Harzfilms auf einen Temperaturschwellenwert oberhalb des Schmelzschwellenwertes des thermoplastischen Harzes umfasst, wobei das erste Erhitzen vor dem zweiten Erhitzen umgesetzt wird und das zweite Erhitzen direkt vor dem Einführen des thermoplastischen Harzfilms in das Stanzsystem umgesetzt wird.

8. Verfahren nach einem der Ansprüche 1 bis 7, ferner umfassend an dem Ende des Durchlassens (430) in dem Stanzsystem ein Ausstoßen von Luftstrahlen aus Kanälen, die in dem Boden der Hohlräume des Aufnahmezylinders des Stanzsystems angeordnet sind, um das Entformen des gestanzten Films zu erleichtern.

9. Verfahren nach einem der Ansprüche 1 bis 8, ferner umfassend ein Reinigen der Zähne der Steckzylinder und der Hohlräume der Aufnahmezylinder des Stanzsystems mit Hilfe eines Reinigungssystems, das an jedem der Zylinder montiert und dazu ausgestaltet ist, dass es sämtliche Rückstände auf den Zähnen oder den Hohlräumen entfernt, bevor sie wieder in Kontakt mit dem Film gebracht werden.

10. Verfahren nach einem der Ansprüche 1 bis 9, umfassend ein Steuern der Temperatur der Zylinder des Stanzsystems auf eine Temperatur unterhalb der Kristallisationstemperatur oder der Glasübergangstemperatur des thermoplastischen Harzes.

11. Verfahren nach einem der Ansprüche 1 bis 10, ferner umfassend vor dem Durchlassen (430) in dem Stanzsystem Durchlässen des thermoplastischen Harzfilms in einem Vorbereitungssystem, das zwei identische Presszylinder mit Hohlräumen einander gegenüber während des Betriebs des Vorbereitungssystems umfasst und ermöglicht, den Film an jeder Stelle der Presszylinder frei von Hohlraum zu komprimieren und Material auf Höhe von Bereichen (60) des Films zu verschieben, die sich gegenüber den Hohlräumen der Presszylinder befinden.

12. Linie (1) zur kontinuierlichen Herstellung einer komplexen Mehrelement-Akustikplatte (120) für eine Akustikdämmungsstruktur (100), umfassend eine komplexe Mehrelement-Akustikplatte (120), die sich in einer horizontalen Richtung (D_{H}) und einer vertikalen Richtung (D_{V}) erstreckt und in der vertikalen Richtung (D_{V}) zwischen einer porösen Akustikhaut (140) und einer reflektierenden Akustikhaut (110) liegt, wobei die komplexe Mehrelement-Akustikplatte (120) mehrere komplexe Akustikelemente (121), die jeweils eine Form aufweisen, die sich allmählich zwischen einer Basis (122) und einer Oberseite (123) verjüngt, und mehrere Trennwände (131), die jedes komplexe akustische Element umgeben, um mehrere Akustikzellen (150) zu bilden, umfasst, wobei sich die Trennwände in der vertikalen Richtung (DV) von der Basis (122) der komplexen Akustikelemente (121) erstrecken,
**dadurch gekennzeichnet, dass** die Herstellungslinie (1) umfasst:
- ein Stanzsystem (3), das mindestens ein Paar von komplementären Zylindern (31, 32) umfasst, wobei das Paar von komplementären Zylindern einen Steckzylinder (31) mit Zähnen (310), die sich radial von dem Steckzylinder (31) vorragend erstrecken, und einen Aufnahmezylinder (32) mit Hohlräumen (320) auf seiner radialen Oberfläche umfasst, wobei die Hohlräume (320) des Aufnahmezylinders (32) komplementäre Formen zu den Formen der Zähne (310) des Steckzylinders (31) aufweisen,
- ein Mittel zum Bereitstellen (2) eines thermoplastischen Harzfilms (6)
- an dem Eingang des Stanzsystems (3),
- ein Mittel zum Erhitzen (4) des thermoplastischen Harzfilms (6) vor dem Eingang des Stanzsystems (3),
- wobei das Stanzsystem (3) ferner eine Trennvorrichtung umfasst, die an dem Ausgang zwischen dem gestanzten Film und dem Aufnahmezylinder (32) angeordnet ist.

13. Herstellungslinie (1) nach Anspruch 12, ferner umfassend ein Mittel zum Konditionieren (5) des gestanzten thermoplastischen Harzfilms (6), der an dem Ausgang des Stanzsystems (3) produziert wird.

14. Herstellungslinie (1) nach einem der Ansprüche 12 oder 13, wobei das Mittel zum Bereitstellen (2) eine Rolle eines thermoplastischen Harzfilms (6) mit einer Dicke, die zwischen 0,1 und 1,5 mm liegt, umfasst.

15. Herstellungslinie (1) nach einem der Ansprüche 12 bis 14, wobei das Mittel zum Bereitstellen (4) des thermoplastischen Harzfilms (6) an dem Eingang des Stanzsystems (3) ein Zuführsystem umfasst, das dazu ausgestaltet ist, ein Schieben des thermoplastischen Harzfilms synchronisiert mit einem Ziehen des thermoplastischen Harzfilms (6) anzuwenden, das durch das Stanzsystem (3) angewendet wird.

16. Herstellungslinie (1) nach einem der Ansprüche 12 bis 15, wobei das Mittel zum Erhitzen (4) des thermoplastischen Harzfilms (6) ein Mittel zum Erhitzen (4) durch Wärmeleitung und/oder einen Infrarotofen umfasst.

17. Herstellungslinie (1) nach einem der Ansprüche 12 bis 16, wobei das Mittel zum Erhitzen (4) des thermoplastischen Harzfilms (6) dazu ausgestaltet ist, die zwei Seiten des thermoplastischen Harzfilms (6) auf einmal zu erhitzen.

18. Herstellungslinie (1) nach einem der Ansprüche 12 bis 17, wobei das Mittel zum Erhitzen (4) ein erstes Modul zum Erhitzen des thermoplastischen Harzfilms (6) auf einen ersten Temperaturschwellenwert unterhalb des Schmelzschwellenwertes des thermoplastischen Harzes und ein zweites Modul zum Erhitzen des thermoplastischen Harzfilms (6) auf einen Temperaturschwellenwert oberhalb des Schmelzschwellenwertes des thermoplastischen Harzes umfasst, wobei das erste Modul zum Erhitzen vor dem zweiten Modul zum Erhitzen in Bezug auf die Richtung der Verschiebung des Films (6) angeordnet ist.

19. Herstellungslinie (1) nach einem der Ansprüche 12 bis 18, wobei der Aufnahmezylinder (32) des Stanzsystems (3) Kanäle (325) umfasst, die in dem Boden seiner Hohlräume (320) angeordnet sind, aus denen Luftstrahlen ausgestoßen werden, um das Entformen des gestanzten Films zu erleichtern.

20. Herstellungslinie (1) nach einem der Ansprüche 12 bis 19, wobei das Stanzsystem (3) ein System zum Reinigen (8) umfasst, das auf jedem der Zylinder (31, 32) des Stanzsystems (3) montiert und dazu ausgestaltet ist, sämtliche Rückstände auf den Zähnen (310) oder den Hohlräumen (320) zu entfernen, bevor sie wieder in Kontakt mit dem Film (6) gebracht werden.

21. Herstellungslinie (1) nach einem der Ansprüche 12 bis 20, umfassend eine Vorrichtung zum Steuern der Temperatur der Zylinder (31, 32) des Stanzsystems (3) auf eine Temperatur unterhalb der Kristallisationstemperatur oder der Glasübergangstemperatur des thermoplastischen Harzfilms (6).

22. Herstellungslinie (1) nach einem der Ansprüche 12 bis 21, wobei das Material des thermoplastischen Harzfilms (6) aus Polyaryletherketonen (PAEK), Polysulfon (PSU), Phenylen-Polysulfiden (PPS), Polyetherimiden (PEI), Polycarbonaten (PC) und Polyamiden (PA) ausgewählt ist.

23. Herstellungslinie (1) nach einem der Ansprüche 12 bis 22, wobei das thermoplastische Harz des Films (6) Fasern auf mindestens einem Teil seines Abschnittes umfasst, wobei die Fasern aus Glas, Karbon oder Aramid sind.

24. Herstellungslinie (1) nach einem der Ansprüche 12 bis 23, wobei die komplexen Akustikelemente der Platte (121) eine pyramidale, konische oder spinale Form aufweisen.

25. Herstellungslinie (1) nach einem der Ansprüche 12 bis 24, ferner umfassend vor dem Stanzsystem (3) ein Vorbereitungssystem (9), das zwei identische Presszylinder (90) mit Hohlräumen (900) einander gegenüber während des Betriebs des Vorbereitungssystems (9) umfasst und ermöglicht, den Film (6) an jeder Stelle der Presszylinder (90) frei von Hohlraum (900) zu komprimieren und Material auf Höhe von Bereichen (60) des Films zu verschieben, die sich gegenüber den Hohlräumen (900) der Presszylinder (90) befinden.

26. Herstellungslinie nach einem der Ansprüche 12 bis 25, wobei die Zähne (310) des Steckzylinders (31) des Paares von komplementären Zylindern jeweils eine Spitze umfassen, die dazu ausgestaltet ist, den Film des thermoplastischen Harzes zu durchstechen.

## Claims

1. A method for continuously manufacturing a complex acoustic multi-element panel (120) for an acoustic attenuation structure (100) comprising a complex acoustic multi-element panel (120) extending following a horizontal direction (D_{H}) and a vertical direction (D_{V}) and comprised along the vertical direction (D_{V}) between a porous acoustic skin (140) and a reflective acoustic skin (110), said complex acoustic multi-element panel (120) comprising a plurality of complex acoustic elements (121) each having a shape gradually narrowing between a base (122) and a top (123) and a plurality of partitions (131) surrounding each complex acoustic element so as to form a plurality of acoustic cells (150), said partitions extending following the vertical direction (DV) from the base (122) of the complex acoustic elements (121),
**characterized in that** the manufacturing method comprises:
- a supply (400) of a thermoplastic resin film at the entry of a stamping system comprising at least one pair of complementary cylinders,
- a heating (410) of said thermoplastic resin film upstream of the entry of the stamping system, and
- a passage (420) of said thermoplastic resin film between said at least one pair of complementary cylinders, said pair of complementary cylinders comprising a male cylinder with teeth radially protruding from the cylinder and a female cylinder with cavities on its radial surface, the cavities of the female cylinder being of shapes complementary to the shapes of the teeth of the male cylinder, and
- a separation of the stamped film at the exit of the stamping system using a separator disposed at the exit of the stamping system between the stamped film and the female cylinder.

2. The method according to claim 1, further comprising a conditioning (430) the stamped thermoplastic resin film produced at the exit of the stamping system.

3. The method according to any of claims 1 or 2, wherein the supply (310) is carried out continuously using a roll of a thermoplastic resin film with a thickness comprised between 0.1 and 1.5 mm.

4. The method according to any one of claims 1 to 3, wherein the supply (410) of the thermoplastic resin film at the entry of the stamping system comprises a pushing of the thermoplastic resin film by a film supply system and a pulling of the thermoplastic resin film by the stamping system, said pushing and said pulling being simultaneous to limit the risks of undesired stretching of the film.

5. The method according to any one of claims 1 to 4, wherein the heating (420) of the thermoplastic resin film comprises a heating by thermal conduction and/or a heating by infrared oven.

6. The method according to any one of claims 1 to 5, wherein the heating (420) of the thermoplastic resin film is applied on both faces of the thermoplastic resin film.

7. The method according to any one of claims 1 to 6, wherein the heating (420) comprises a first heating of the thermoplastic resin film up to a first temperature threshold below the melting threshold of the thermoplastic resin, and a second heating of the thermoplastic resin film up to a temperature threshold above the melting threshold of the thermoplastic resin, the first heating being carried out before the second heating and the second heating being carried out just before the introduction of the thermoplastic resin film into the stamping system.

8. The method according to any one of claims 1 to 7, further comprising, after passage (430) in the stamping system, an emission of air jets from channels disposed in the bottom of the cavities of the female cylinder of the stamping system to help the unmolding of the stamped film.

9. The method according to any one of claims 1 to 8, further comprising a cleaning of the teeth of the male cylinders and of the cavities of the female cylinders of the stamping system using a cleaning system mounted on each of the cylinders and configured to remove any residue on the teeth or the cavities before they are put back into contact with the film.

10. The method according to any one of claims 1 to 9, comprising a control of the temperature of the cylinders of the stamping system at a temperature lower than the crystallization temperature or at the glass transition temperature of the thermoplastic resin.

11. The method according to any of claims 1 to 10, further comprising upstream of the passage (430) in the stamping system, a passage of the thermoplastic resin film in a preparation system comprising two identical press cylinders with cavities facing each other during the operation of the preparation system and making it possible to compress the film on each place of the press cylinders free of cavities and to move material at the level of the areas (60) of the film located facing the cavities of the press cylinders.

12. A line (1) for continuously manufacturing a complex acoustic multi-element panel (120) for an acoustic attenuation structure (100) comprising a complex acoustic multi-element panel (120) extending following a horizontal direction (D_{H}) and a vertical direction (D_{V}) and comprised along the vertical direction (D_{V}) between a porous acoustic skin (140) and a reflective acoustic skin (110), said complex acoustic multi-element panel (120) comprising a plurality of complex acoustic elements (121) each with a gradually narrowing shape between a base (122) and a top (123) and a plurality of partitions (131) surrounding each complex acoustic element so as to form a plurality of acoustic cells (150), said partitions extending following the vertical direction (D_{V}) from the base (122) of the complex acoustic elements (121),
**characterized in that** the manufacturing line (1) comprises:
- a stamping system (3) comprising at least one pair of complementary cylinders (31, 32), said pair of complementary cylinders comprising a male cylinder (31) with teeth (310) radially protruding from the male cylinder (31) and a female cylinder (32) with cavities (320) on its radial surface, the cavities (320) of the female cylinder (32) being of shapes complementary to the shapes of the teeth (310) of the male cylinder (31),
- a means (2) for supplying a thermoplastic resin film (6) at the entry of said stamping system (3),
- a means (4) for heating said thermoplastic resin film (6) upstream of the entry of the stamping system (3),
- the stamping system (3) further comprising a separator (7) disposed at the exit between the stamped film and the female cylinder (32).

13. The manufacturing line (1) according to claim 12, further comprising a means for conditioning (5) the stamped thermoplastic resin film (6) produced at the exit of the stamping system (3).

14. The manufacturing line (1) according to any of claims 12 or 13, wherein the supply means (2) comprises a roll of thermoplastic resin film (6) with a thickness comprised between 0.1 and 1.5 mm.

15. The manufacturing line (1) according to any one of claims 12 to 14, wherein the means for supplying (4) the thermoplastic resin film (6) at the entry of the stamping system (3) comprises a supply system configured to apply a pushing of the thermoplastic resin film synchronized with a pulling of the thermoplastic resin film (6) applied by the stamping system (3).

16. The manufacturing line (1) according to any one of claims 12 to 15, wherein the means for heating (4) the thermoplastic resin film (6) comprises a thermal conduction heating means (4) and/or an infrared oven.

17. The manufacturing line (1) according to any one of claims 12 to 16, wherein the means (4) for heating the thermoplastic resin film (6) is configured to heat the two faces of the thermoplastic resin film (6) at a time.

18. The manufacturing line (1) according to any one of claims 12 to 17, wherein the heating means (4) comprises a first module for heating the thermoplastic resin film (6) up to a first temperature threshold below the melting threshold of the thermoplastic resin, and a second module for heating the thermoplastic resin film (6) up to a temperature threshold above the melting threshold of the thermoplastic resin, the first heating module being disposed upstream of the second heating module with respect to the direction of displacement of the film (6).

19. The manufacturing line (1) according to any one of claims 12 to 18, wherein the female cylinder (32) of the stamping system (3) comprises channels (325) disposed in the bottom of its cavities (320) from which air jets are emitted to help the unmolding of the stamped film.

20. The manufacturing line (1) according to any one of claims 12 to 19, wherein the stamping system (3) comprises a cleaning system (8) mounted on each of the cylinders (31, 32) of the stamping system (3) and configured to remove any residue on the teeth (310) or the cavities (320) before they are put back into contact with the film (6).

21. The manufacturing line (1) according to any one of claims 12 to 20, comprising a device for controlling the temperature of the cylinders (31, 32) of the stamping system (3) at a temperature below the crystallization temperature or at the glass transition temperature of the thermoplastic resin of the film (6).

22. The manufacturing line (1) according to any one of claims 12 to 21, wherein the material of the thermoplastic resin film (6) is chosen from polyaryletherketones (PAEK), polysulfone (PSU), polyphenylene sulphides (PPS), polyetherimides (PEI), polycarbonates (PC) and polyamides (PA).

23. The manufacturing line (1) according to any one of claims 12 to 22, wherein the thermoplastic resin of said film (6) comprises fibers on at least part of its section, the fibers being made of glass, carbon, or aramid.

24. The manufacturing line (1) according to any one of claims 12 to 23, wherein the complex acoustic elements of the panel (121) have a pyramidal, conical or spinal shape.

25. The manufacturing line (1) according to any of claims 12 to 24, further comprising, upstream of the stamping system (3), a preparation system (9) comprising two identical press cylinders (90) with cavities (900) facing each other during the operation of the preparation system (9) and making it possible to compress the film (6) on each place of the press cylinders (90) free of cavities (900) and to move material at the level of the areas (60) of the film located facing the cavities (900) of the press cylinders (90).

26. The manufacturing line according to any of claims 12 to 25, wherein the teeth (310) of the male cylinder (31) of said pair of complementary cylinders each comprise a tip configured to pierce the thermoplastic resin film.
